# EUROPEAN PATENT APPLICATION

(11) **EP 2 036 662 A1**
(43) Date of publication of application: **18.03.2009**
(21) Application number: 07425571.2
(22) Date of filing: 17.09.2007
(51) Int. Cl.: B23Q 1/00, B23B 31/107

(54) **Quick-change pallet-holding device**

(71) Applicant: Autoblok S.p.A., 10040 Caprie (TO) (IT)
(72) Inventor: Bronzino, Walter, 10040 Caprie (TO) (IT); Bronzino, Pier Mauro, 10040 Caprie (TO) (IT)
(74) Representative: Spandonari, Carlo

(57) **Abstract**

The device comprises a support (12) with a cylindrical chamber (28) in which a piston (34) is slidable subject to the pressure in the chamber in a first direction, against elastic means (42), and restraint members (50) which are radially slidable between a position engaging the seat (20) in the area surrounded by the restraint groove (68), and a position in which the seat (20) is disengaged, and with motion transmission means cooperating to change the axial motion of the piston into a radial motion of the restraint means. Each of said restraint members consists of a pin (50) having a radial axis and an insertion end (60) insertable into the restraint groove (68). The motion transmision means comprise first inclined surfaces (56a, 56b, 58a, 58b) formed on the pin (50) and complementary, mutually slidable, second inclined surfaces (46a, 46b) formed on a rigid structure (38) integral with the piston (34).

## Description

The present invention relates to a quick-change pallet-holding device.

As known, semifinished products that are to be subjected to certain precision machinings can be mounted on a workpiece-holding support, with which they generally form a pallet, which is tranferred as a whole to the machine tool. In order to achieve a stable and accurate positioning during machining, the pallet is supported on a pallet-holding device, or on a plurality of pallet-holding devices provided with centering means cooperating with corresponding centering means coupled to the workpiece-holding support, as well as with a pneumatic, quick-change locking/unlocking system.

The above quick-change locking/unlocking system typically comprises a ball cage which restrainedly cooperates with a corresponding annular seat formed on an anchor member fixed to the workpiece-holding support. The ball cage is biased in a radially expanded configuration, in which it engages the annular seat, by a cylindrical guide that is axially movable under control of pneumatic driving means acting against elastic means. The cylindrical guide has an annular groove so that, by operating the pneumatic driving means in such a way as to align the groove to the cage, the balls are free to enter the groove and the annular seat of the anchor member is disengaged, whereby the pallet becomes free.

The above locking system has the drawback that the contact is punctiform between the balls and the surface of the annular seat of the anchor member, so that very high specific contact pressures are generated. This circumstance considerably reduces the maximum restraining force of the device and makes it necessary to periodically replace the balls in order to reduce the risk of jamming by wear of the balls.

Another drawback of the above locking system is that, due to the gap between the balls, the internal locking mechanisms of the device are not sealingly isolated and consequently they are subjected to the dust of the working environment as well as to the abrasive action of the coolant used while machining, with consequent further negative effects in terms of wear.

Therefore, it is a main object of the present invention to provide a quick-change pallet-holding device which is more reliable and rugged with respect to the known systems, with a very low decay of performance by wear, and by which higher restraining forces and a high coupling accuracy are achieved.

It is another object of the invention to provide a device in which the internal locking mechanisms are effectively isolated from the work environment.

It is a further object of the invention to provide a device having a reduced number of components in order to simplify the assembling thereof.

The above object and other advantages, which will better appear below, are achieved by a quick-change pallet-holding device having the features recited in claim 1, while the other claims state other advantageous features of the invention.

The invention will be now described in more detail with reference to a preferred, non-exclusive embodiment shown by way of non-limiting example in the attached drawings, wherein:

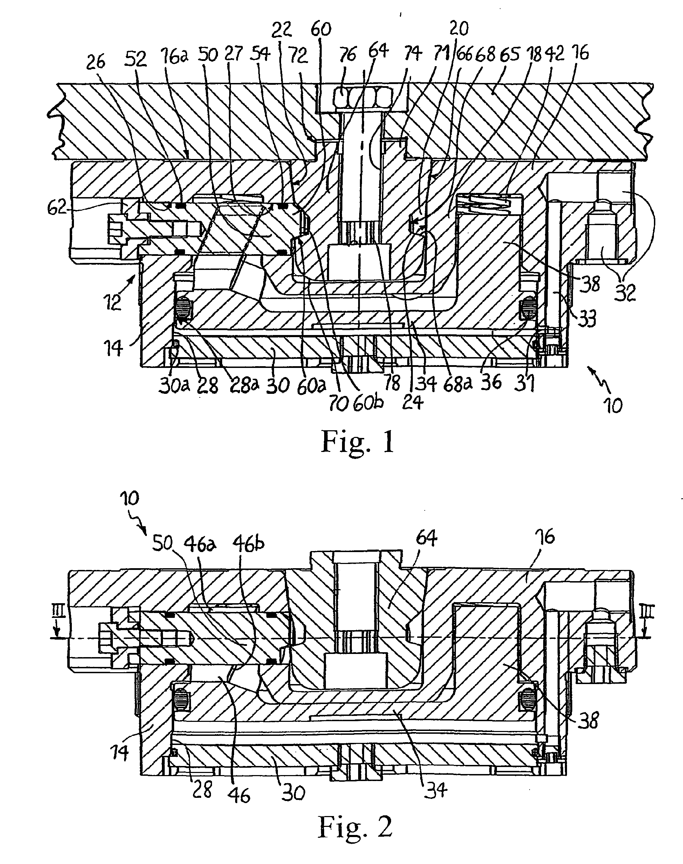

Fig. 1 is a view in axial cross-section of the pallet-holding device according to the invention, in a locked configuration;
Fig. 2 is a view similar to Fig. 1, showing the device in an unlocked configuration;

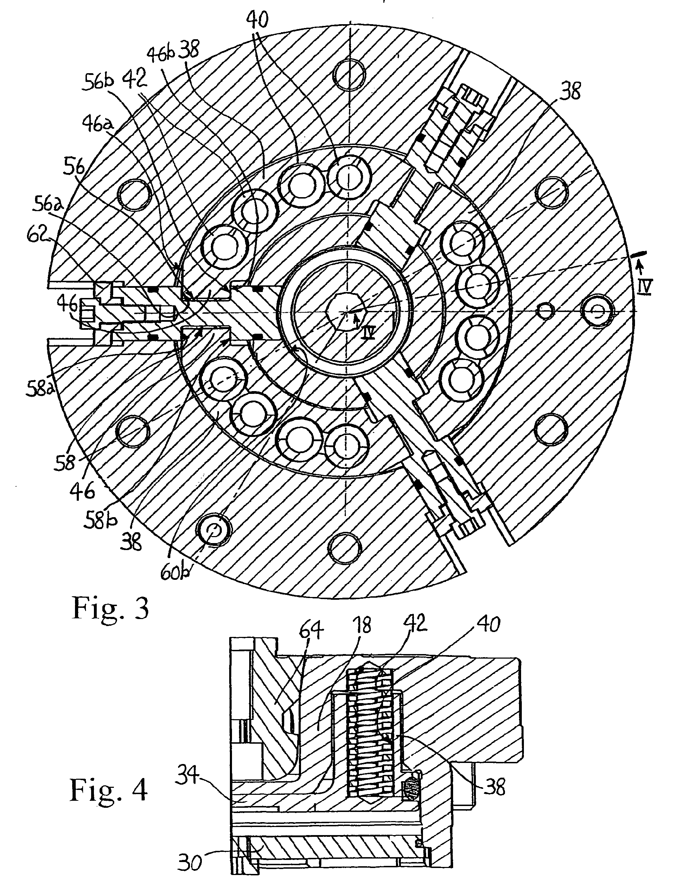

Fig. 3 is a view in cross-section made along line III-III of Fig. 2;
Fig. 4 is a view in cross-section made along line IV-IV of Fig. 3.

With reference to the above Figures, a pallet-holding device 10 comprises a support 12 having a vertical, hollow cylindrical housing 14 and a disc-shaped platform 16 which is coaxially supported on the upper end of housing 14 and is made enbloc with it. A pallet-supporting surface 16a is defined on platform 16. A socket 18 axially projects inwards from the center of platform 16 and has a seat 20 for a locking member defined therein, with an upper frustoconical portion 22 and an inner cylindrical portion 24. Three equally-spaced radial holes 26 are bored on cylindrical housing 14 and are aligned to respective three radial ports 27 bored on the lateral wall of socket 18.

A cylindrical chamber 28 is defined within cylindrical housing 14 and is closed at its lower end by a cover 30 provided with an annular seal 30a. Cylindrical chamber 28 has an air intake 31 that is in fluid communication with openings 32 via a air-feeding duit 33. Openings 32 are open to the perimeter of platform 16 and are connectable to air-supply means (not shown).

Cylindrical chamber 28 has a ground portion 28a along which a piston 34 is sealingly slidable. The piston is externally provided with a seal 36. Three equally-spaced sectors of a cylinder 38 coaxially project from the upper face of piston 34 and are slidably received in the annular gap between cylindrical chamber 28 and socket 18. Sectors of a cylinder 38 are each provided with four longitudinal seats 40 in which respective helical springs 42 are received. Springs 42 are compressed between the bottom of the respective seat 40 and the top of cylindrical chamber 28, on the side of platform 16.

Inclined rectilinear guides 46 lying on a plane parallel to the axis of the piston are formed on the lateral edges of each sector. Guides 46 are each delimited between two parallel, flat surfaces, or facets, 46a, 46b, which are respectively formed on the outer wall and on the inner wall of the sector, along the lateral edge of the latter, and are arranged such as they converge inwards in the direction of platform 16.

In the gap between each pair of sectors 38, a pin 50 is received, which is slidably inserted in a respective one of radial holes 26 and in the port 27 aligned thereto, and is provided with a pair of O-rings 52 and 54 engaging the radial hole and the port respectively. Each pin 50 has two opposed, inclined grooves 56, 58 formed on its lateral wall, which are slidably engaged by rectilinear guides 46 of the two sectors between which pin 50 is received. Each groove 56, 58 is defined between two parallel, inclined flat surfaces 56a, 56b and 58a, 58b which are complementary to, i.e., match with, the facets of the corresponding guide. The innermost end 60 of pin 50 is shaped as a tooth, while the opposite end has a cap 62 screwed thereto. Tooth 60 has a lower contact surface 60a having a hollow, frustoconical profile generated about an axis lying at right angles to the axis of pin 50, and terminates at its front end with a cylindrical concavity 60b generated about an axis parallel to the axis of piston 34.

A pin-shaped locking member 64, which is to be fixed to a general workpiece-holding support 65, is axially insertable into seat 20, and has a centering frustoconical portion 66 having a profile complementary to, i.e., matching with the profile of frustoconical portion 22 of the seat, as well as a restraint groove 68 in which the toothed ends of pins 50 are radially insertable. Restraint groove 68 is delimited at its lower end by a frustoconical contact surface 68a having a profile complementary to, i.e., matching with the lower contact surfaces 60a of teeth 60. The insertion end of locking member 64 is rounded in 70, while the opposite end has a central cylindrical projection 71 insertable into a corresponding hole 72 of workpiece-holding support 65. Central cylindrical projection 71 has a threaded axial hole 74 for connection to workpiece-holding support 65 by a bolt 76. Threaded axial hole 74 terminates with a hexagonal hole 78 engageable by an Allen wrench (not shown) to prevent the locking pin 64 from rotating while bolt 76 is screwed.

In the operation, the pallets are each provided with a respective locking member 64, which is fixed to workpiece-holding support 65 by bolt 76. To lock the pallet on the pallet-holding device, cylindrical chamber 28 is pressurized so that piston 34 moves upwards against springs 42, and pins 50 radially moves outwards by mutual engagement between the inclined surfaces of grooves 56, 58 and of guides 46. In this configuration, seat 20 is free to receive locking member 64, which is axially inserted into the seat; an accurate centering is achieved by mutual engagement between the conical surfaces of pin 66 and of seat 22, with the workpiece-holding support lying on platform 16. By depressurizing cylindrical chamber 28, piston 34 is pushed back to its starting position by springs 42, and pins 50 radially move inwards and engage restraint groove 68 with their toothed ends 60, so that locking member 64 is axially locked by mutual engagement between the frustoconical contact surfaces of pins 50 and of restraint groove 68.

To unlock the pallet, cylindrical chamber 28 is pressurized in order to disengage pins 50 from frustoconical groove 68, whereby locking member 64 is unlocked again.

In the above-described pallet-holding device the restraining action is performed by mutual contact between frustoconical surfaces instead of by punctiform contact, as it happens with the ball cage systems. Furthermore, the unlocking action is also performed by mutual engagement between inclined flat surfaces instead of by punctiform contact. As the person skilled in the art will understand, this circumstance leads to a considerable reduction of the specific pressures to which the various movable components are subjected both during the restraining action and during the locking/unlocking action, with consequent improvement of the sturdiness and reliability of the device.

In particular, the above-described guides 46, which are formed enbloc on a rigid structure consisting of rugged sectors of a cylinder integral with the piston, provides the device with a very high reliability and prevents the mutually sliding components from deforming over time and consequently affecting the accurate operation of the device.

Furthermore, the above-described pallet-holding device has the further advantage that the internal driving mechanisms are sealingly isolated from the working environment due to the annular rings 52, 54 which surround pins 50 and seal cylindrical chamber 28, whereby the device is further protected from wear.

A preferred embodiment has been described herein, but of course many changes may be made by a person skilled in the art within the scope of the claims. For instance, the sectors could be removably attached to the piston instead of being made enbloc with it. Also, the arrangement of the inclined grooves and of the guides could be inverted, i.e., the grooves could be formed on the sectors and the guides on the pins. Furthermore, althought in the above description the pallet is assumed to be supported on a sole pallet-holding device, it should be understood that, depending on the requirements, two or more cooperating devices could be used, in a way conventional in this field.

## Claims

1. A pallet-holding device (10), comprising
- a support (12) having a cylindrical chamber (28) defined therein and a platform (16) lying at right angles to the cylindrical chamber (28) and provided with an axial seat (20) into which a locking member (64) is insertable, which is attachable to the pallet and has a restraint groove (68),
- a piston (34) sealingly slidable within the cylindrical chamber (28) and subject to the pressure in the chamber in a first direction, against elastic means (42),
- at least a pair of restraint members (50) slidably supported in a radial direction between a radial engagement position, in which they engage the seat (20) in the area surrounded by the restraint groove (68), with the locking member (64) inserted in the seat, and a radial disengagement position, in which they disengage the seat (20),
- motion transmission means, which are coupled to said restraint members (50) and said piston (34) and cooperate to change the axial motion of the piston into a radial motion of the restraint means,
**characterized in that** said restraint members each consist of a pin (50) having a substantially radial axis and an insertion end (60) insertable into the restraint groove (68), and **in that** said motion transmision means comprise first inclined surfaces (56a, 56b, 58a, 58b) formed on the pin (50) and slidably engaged by complementary, second inclined surfaces (46a, 46b) formed on a rigid structure (38) integral with the piston (34), said first and second inclined surfaces being arranged such that they cause the pin (50) to move away form the restraint groove (68) when the piston (34) moves in said first direction.

2. The pallet-holding device of claim 1, **characterized in that** said pin (50) has at least one inclined rectilinear groove (56, 58) on its lateral wall, which is slidably engaged by an inclined rectilinear guide (46) which has a substantially complementary profile, is integral with the rigid structure (38) and lies on a plane parallel to the axis of the piston (34).

3. The pallet-holding device of claim 2, **characterized in that** each of said pins (50) has a pair of said rectilinear grooves (56, 58) formed on respective opposite sides, which are engaged by a pair of respective, opposed inclined guides (46).

4. The device of claim 3, **characterized in that** said rigid structure comprises at least one pair of sectors of a cylinder (38) rising coaxially from the piston (34) and having longitudinal gaps defined between them, in each of which a pin (20) is slidably inserted, said inclined guides (46) lying on the lateral edges of the sectors (38).

5. The pallet-holding device of claim 4, **characterized in that** each of said guides (46) is defined between two of said second inclined surfaces (46a, 46b), which are respectively formed on the outer wall and on the inner wall of the sector (38) along its edge.

6. The pallet-holding device of claim 4 or 5, **characterized in that** said elastic means comprise helical springs (42) which are received in respective longitudinal seats (40) formed on said sectors of a cylinder (38) and are compressed between the bottom of the respective seat (40) and the platform (16).

7. The pallet-holding device of any of claims 1 to 6, **characterized in that** the insertion end (60) of the pin (50) has a lower contact surface (60a) having a concave, frustoconical profile about an axis lying at right angles to the axis of the pin (50), and the restraint groove (68) is axially delimited by a complementary, frustoconical contact surface (68a) which is restrainedly engageable by the contact surface (60a) of the pin.

8. The pallet-holding device of any of claims 1 to 7, **characterized in that** said seat (20) is formed in a socket (18) which axially projects from the platform (16) to the inside of the cylindrical chamber (28) and has radial ports (27) in which said pins (50) are slidably inserted.

9. The pallet-holding device of claim 8, **characterized in that** each pin is provided with an O-ring (54) which sealingly engages said radial port (27).

10. The pallet-holding device of any of claims 1 to 9, **characterized in that** said first and second inclined surfaces (46a, 46b, 56a, 56b, 58a, 58b) are flat.
